# EUROPEAN PATENT APPLICATION

(11) **EP 4 704 235 A1**
(43) Date of publication of application: **04.03.2026**
(21) Application number: 23934732.1
(22) Date of filing: 09.06.2023
(51) Int. Cl.: H01M 50/244, H01M 50/249, H01M 50/213, H01M 10/613

(54) **BATTERY CELL GROUPING STRUCTURE AND CTP BATTERY PACK**

(30) Priority: 28.04.2023 CN 202321020777 U
(71) Applicant: Eve Energy Co. Ltd., Huizhou, Guangdong 516000 (CN)
(72) Inventor: QIU, Wencong, Huizhou, Guangdong 516000 (CN); CHEN, Zhiwei, Huizhou, Guangdong 516000 (CN); CHEN,Chaohai, Huizhou, Guangdong 516000 (CN); JIANG, Jibing, Huizhou, Guangdong 516000 (CN)
(74) Representative: Studio Torta S.p.A.
(86) International application number: PCT/CN2023/099544
(87) International publication number: WO 2024/221553

(57) **Abstract**

This application discloses a battery cell grouping structure and a CTP battery pack having the battery cell grouping structure. The battery cell grouping structure includes a battery cell assembly, including a plurality of battery cells and a plurality of liquid cooling plates, wherein the plurality of battery cells are arranged in an array, and at least one of the liquid cooling plates are arranged between and fixedly bonded to ones of the plurality of battery cells in every two rows of the array by a thermal conductive adhesive; a plastic support, including a support body, wherein bottoms of the plurality of battery cells are each fixedly bonded to the support body by a structural adhesive; and a cell connection system (CCS) assembly, formed as a film, wherein tops of the plurality of the battery cells are fixedly connected to the CCS assembly.

## Description

This application claims the priority to and benefit of Chinese Patent Application No. 202321020777.5, filed with China Patent Office on April 28, 2023, the entire contents of which is incorporated herein by reference.

### TECHNICAL FIELD

The present application relates to the technical field of battery, and in particular to a battery cell grouping structure and a CTP (cell-to-pack) battery pack.

### BACKGROUND

As the heart of new energy vehicles, the battery system plays a vital role in safety, endurance and other aspects. For a battery system in the related art, when the cells are grouped, the cells are usually packaged into cell modules through peripheral structural parts, and then the cell modules are integrated as units into the battery case. However, the provision of peripheral structural parts will occupy the space of the cells, thereby reducing the energy density of the battery pack. In addition, the cell grouping in the related art needs a large number of parts of different types and quantities, resulting in a complicated assembly process.

### SUMMARY

The present application provides a battery cell grouping structure and a CTP battery pack to simplify the battery cell grouping structure and its assembly process and to improve the energy density of the battery pack.

The technical solutions adopted by this application to solve the problem are as follows.

In a first aspect, an embodiment of the present application provides a battery cell grouping structure, including a battery cell assembly, a plastic support and a cell connection system (CCS) assembly. The battery cell assembly includes a plurality of battery cells and liquid cooling plates; the plurality of battery cells are arranged in an array, and at least one of the liquid cooling plates is provided between every two rows of the battery cells, and the plurality of battery cells are fixed to the at least one liquid cooling plate by means of thermal conductive adhesive. The plastic support includes a support body, and bottoms of the plurality of battery cells are fixed to the support body by means of structural adhesive. The CCS assembly is formed as a film; tops of the plurality of battery cells are fixedly connected to the CCS assembly.

In a second aspect, an embodiment of the present application provides a CTP battery pack, including the above-mentioned battery cell grouping structure.

### BENEFICIAL EFFECTS

The battery cell grouping structure and CTP battery pack provided by the embodiments of the present application have the following technical effects.

The battery cell grouping structure and CTP battery pack according to the embodiments of the present application. In the battery cell grouping structure, every two rows of battery cells in the battery cell assembly are fixed to the liquid cooling plates by thermal conductive adhesive, thereby forming a small module unit for easy handling; according to the embodiments of the present application, the battery cells, liquid cooling plates and plastic support can be connected by adhesives, and then they are connected with the CCS assembly to form a module, thereby simplifying the battery cell grouping structure and its assembly process, and omitting the peripheral structural parts in the related technology, thereby improving the energy density of the battery pack. In addition, the CCS assembly is connected to tops of the plurality of battery cells, and the CCS assembly is formed as a film, which does not occupy space in height.

### BRIEF DESCRIPTION OF THE DRAWINGS

FIG. 1 is a schematic diagram of a battery cell grouping structure according to an embodiment of the present application.
FIG. 2 is an exploded view of a battery cell grouping structure according to an embodiment of the present application.
FIG. 3 is an exploded view of a partial structure of a battery cell assembly according to an embodiment of the present application.
FIG. 4 is a schematic diagram showing the structure of a plastic support according to an embodiment of the present application.
FIG. 5 is a schematic diagram showing the structure of a plastic support according to an embodiment of the present application from another perspective.
FIG. 6 is a cross-sectional view of a battery cell grouping structure according to an embodiment of the present application.
FIG. 7 is an enlarged view of portion A in FIG. 6.

### List of reference numerals:

1, battery cell assembly; 11, battery cell; 111, step; 12, liquid cooling plate; 121, plate body; 122, first sleeve; 123, second sleeve; 124, liquid inlet; 125, liquid outlet; 126, elastic tube; 13, thermal conductive adhesive; 2, plastic support; 21, support body; 211, pillar; 22, structural adhesive; 23, positioning protrusion; 24, adhesive storage recess; 25, pressure relief hole; 26, protrusion structure; 261, first groove; 262, protruding rib; 27, groove structure; 28, flange nut; 281, rubber sealing ring; 29, annular convex edge; 291, connecting block; 292, foam; 3, CCS assembly.

### DETAILED DESCRIPTION OF THE EMBODIMENTS

In the description of the present application, it should be noted that the terms "upper", "lower", "front", "back", "left", "right", "vertical", "horizontal", "top", "bottom", "inside", "outside", etc., indicating orientations or positional relationships, are based on the orientations or positional relationships shown in the accompanying drawings, and are only for the convenience of describing the present application and simplifying the description, and do not indicate or imply that the modules or elements referred to must have a specific orientation, be constructed and operated in a specific orientation, and therefore should not be understood as a limitation on the present application.

Unless otherwise defined, all technical and scientific terms used herein have the same meaning as those commonly understood by those skilled in the art to which this application belongs. The terms used herein in the specification of this application are only for the purpose of describing specific embodiments and are not intended to limit this application.

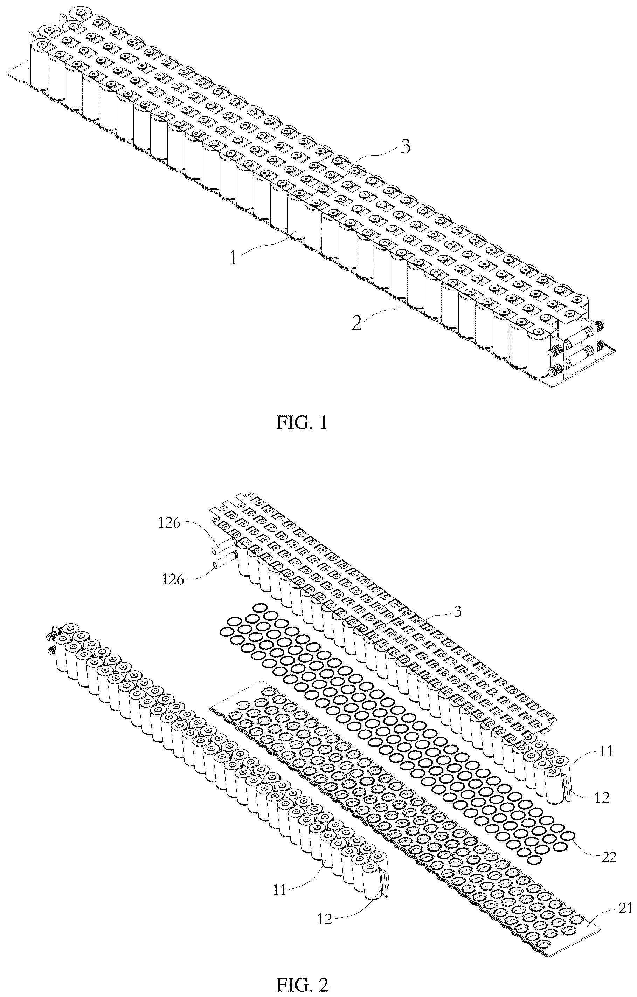

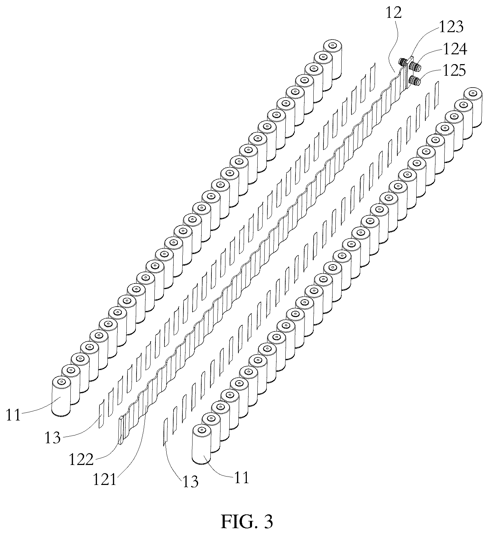

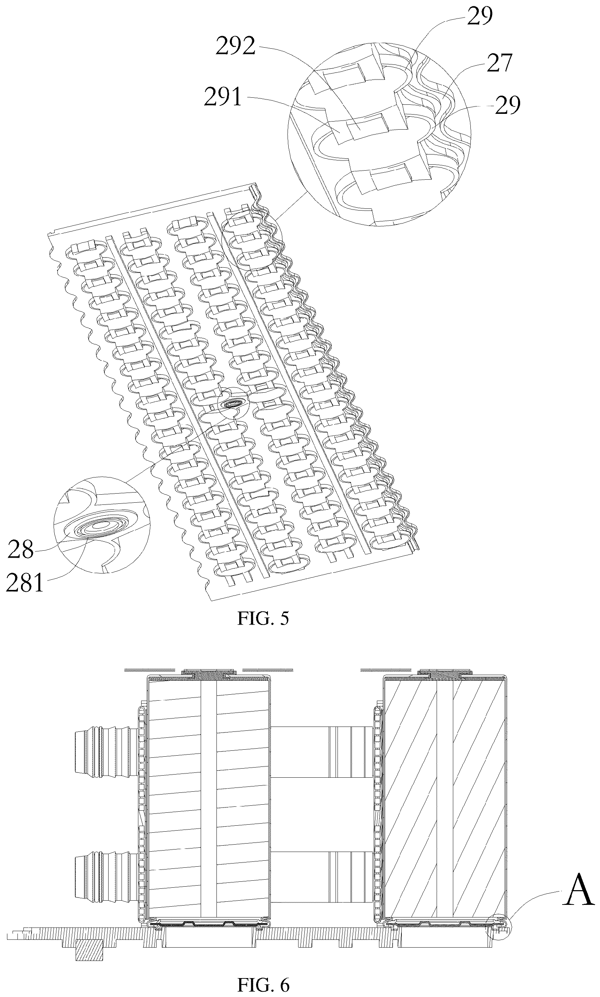

Referring to FIGS. 1-7, the present application provides a battery cell grouping structure, including a battery cell assembly 1, a plastic support 2 arranged at the bottom of the battery cell assembly 1, and a CCS assembly 3 arranged at the top of the battery cell assembly 1. In some embodiments, the battery cell assembly 1 includes a plurality of battery cells 11. The plurality of battery cells 11 are arranged in an array to form a plurality of rows of battery cell groups. A liquid cooling plate 12 is arranged between every two rows of battery cell groups, and the plurality of battery cells 11 in the two rows of battery cell groups are fixed to the liquid cooling plate 12 by thermal conductive adhesive 13, and form a small module unit. The plastic support 2 includes a support body 21 made of plastic material, and the support body 21 is arranged at the bottom of the plurality of battery cells 11. The bottoms of the plurality of battery cells 11 are fixed to the support body by structural adhesive 22. The CCS assembly 3 is formed as a film and covers the tops of the plurality of battery cells 11, and the tops of the plurality of battery cells 11 are fixed to the CCS assembly 3 by welding.

Therefore, the plurality of battery cells 11, liquid cooling plates 12 and plastic support 2 can be connected by adhesives, and then they are connected to the CCS assembly 3 by welding to form a large module unit, thereby simplifying the battery cell grouping structure, reducing assembly processes, and improving the assembly efficiency of the battery cell grouping.

Referring to FIGS. 2-3, in some embodiments, the liquid cooling plate 12 includes a plate body 121 with a wavy shape, and the battery cells 11 are each a cylindrical battery cell and its side wall is matched with the side wall of the liquid cooling plate 12. The side wall of the battery cell 11 is fixed to the side wall of the liquid cooling plate 12 by a thermal conductive adhesive 13. In some embodiments, the liquid cooling plate 12 also includes a first sleeve 122 and a second sleeve 123 arranged at both ends of the plate body 121 to seal both ends of the plate body 121, a flow channel (not shown in the figures) is formed inside the plate body 121, and a liquid inlet 124 and a liquid outlet 125 are provided on the second sleeve 123, and the liquid inlet 124 and the liquid outlet 125 are both connected to the internal flow channel of the plate body 121.

Therefore, the liquid cooling plate 12 is configured to be wavy and arranged between two rows of battery cell groups. When the coolant flows through the internal flow channel of the liquid cooling plate 12, the liquid cooling plate 12 can simultaneously cool and dissipate heat for the battery cells 11 in the two rows of battery cell groups, thereby improving the cooling efficiency.

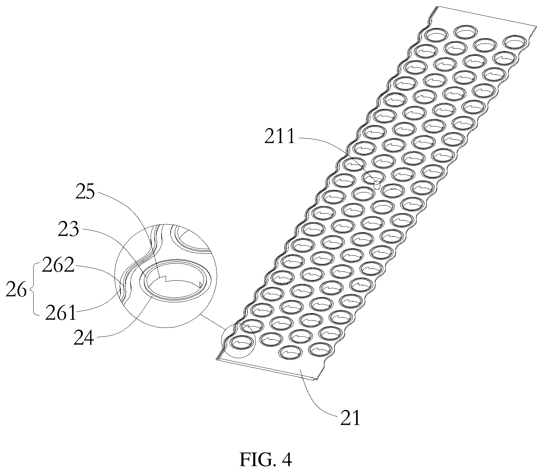

Referring to FIGS. 4-5, the upper end surface of the support body 21 is provided with positioning protrusions 23 arranged in an array and in one-to-one correspondence with the plurality of battery cells 11. In some embodiments, the positioning protrusions 23 are each a circular convex edge. The outer periphery of the positioning protrusion 23 is provided with an adhesive storage recess 24, which is a circular groove and is in communication with the positioning protrusion 23. The structural adhesive 22 is coated in the adhesive storage recess 24.

Therefore, when there is a need to assemble a plurality of battery cells 11 onto the support body 21, the structural adhesives 22 are first applied into the adhesive storage recesses 24, and then the bottoms of the battery cells 11 are aligned with the positioning protrusions 23 and inserted therein, so that the bottoms of the battery cells 11 contact the structural adhesives 22 in the adhesive storage recess 24, and after the adhesives solidify, the battery cells 11 and the plastic support 2 can be bonded and matched.

In some embodiments, the plurality of positioning protrusions 23 and the adhesive storage recesses 24 are integrally injection molded on the upper end surface of the support body 21.

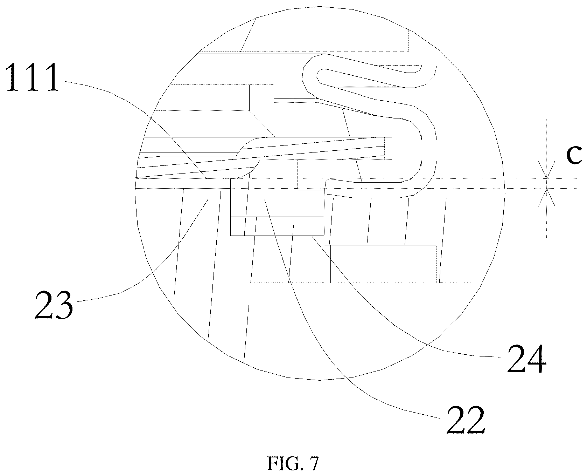

Referring to FIG. 7, the bottom of each battery cell 11 is provided with a step 111, which forms a step surface and a gap c exists between the top surface of the step surface and the upper end surface of the corresponding positioning protrusion 23, and the gap c is in communication with the corresponding adhesive storage recess to form an adhesive overflow cavity. Therefore, when too much adhesive is applied, the adhesive can overflow through the adhesive overflow cavity.

In some embodiments, the support body 21 is provided with pressure relief holes 25 corresponding to the plurality of battery cells 11 at positions corresponding to the plurality of positioning protrusions 23, and the pressure relief holes 25 are each in communication with the pressure relief valve (not shown) at the bottom of the corresponding battery cell 11. The diameter of the pressure relief hole 25 is a, the diameter of the pressure relief valve is b, and a > b, and the difference between a and b is the requirement for the placement of the battery cell 11. Therefore, when the battery cell 11 has thermal runaway, the pressure can be released smoothly through the pressure relief hole 25, thereby improving the safety of the battery.

Referring to FIGS. 4-5, the support body 21 is rectangular and has two opposite long sides and two opposite short sides. A wavy protrusion structure 26 is provided on one of the long sides of the support body 21, and a wavy groove structure 27 is provided on the other long side. The shape of the groove structure 27 is matched with the shape of the protrusion structure 26 to achieve the engagement of two adjacent support bodies 21. In some embodiments, the protrusion structure 26 is a first groove 261 provided on the upper end surface of one long side and a protruding rib 262 protruding from the first groove 261, and the protruding rib 262 has a wavy shape; the groove structure 27 is a second groove formed on the lower end surface of the other long side, and the second groove is a stepped groove and also has a wavy shape.

Therefore, the protrusion structure 26 and the groove structure 27 are connected in snap-fit, multiple plastic supports 2 can be engaged together, so as to be applicable to different usage scenarios. By arranging the protruding rib 262 and the second groove in a same wave shape, the two are more firmly connected when they are snapped together, thereby preventing the plastic supports 2 from offsetting each other. In addition, the protruding rib 262 and the second groove can form a step after being snapped together, so that there will be no horizontal gap between the engaged support bodies 21, thereby preventing leakage of the structural adhesive.

Referring to FIGS. 4-5 again, in some embodiments, the lower end surface of the support body 21 is provided with a plurality of annular convex edges 29 arranged in an array at positions corresponding to the plurality of pressure relief holes 25, and two adjacent annular convex edges 29 arranged along the length direction of the support body 21 are connected by a connecting block 291. A concave cavity is provided in the connecting block 291, and a foam 292 is attached to the concave cavity. In addition, a flange nut 28 is integrally injection-molded in the middle of the lower end surface of the support body 21, and a rubber sealing ring 281 is embedded at the bottom of the flange nut 28.

Therefore, by integrally injection-molding the flange nut 28 in the middle of the support body 21, it can be locked with other structural parts (such as the bottom guard plate) by bolts, and the flange nut 28 has a flange surface, bonding force therefore can be guaranteed in the injection molding. When the plastic support 2 is long, it increases the supporting strength; by arranging the rubber sealing ring 281 at the bottom of the flange nut 28, a sealing is achieved. In addition, when the battery cell 11 has thermal runaway and ejects gas, the support body 21 can be pulled to some extent due to the bolt locking, thereby reducing the impact on the bottom guard plate.

In some embodiments, a pillar 211 is integrally injection-molded in the middle of the upper end surface of the support body 21, and the top of the flange nut 28 extends into the interior of the pillar 211.

In some embodiments, the plurality of annular convex edges 29 and the connecting block 291 are integrally injection molded on the lower end surface of the support body 21.

The assembly process of the battery cell grouping structure of this application is as follows.

A plurality of battery cells 11 in two rows of battery cell groups are fixed to the liquid cooling plate 12 by means of a thermal conductive adhesive 13, thereby forming a small module unit; the bottoms of two small module units are fixed to a plastic support 2 by means of a structural adhesive, and the tops of the two small module units are welded to a CCS assembly 3, thereby forming a large module unit; the protrusion structure 26 on the plastic support 2 in one large module unit and a groove structure 27 on the plastic support 2 in another large module unit are plugged into each other to form a module.

It should be noted that the liquid inlet 124 of one small module unit is connected to the liquid inlet 124 of another small module unit through an elastic tube 126 to achieve a communication therebetween; similarly, the liquid outlet 125 of one small module unit is connected to the liquid outlet 125 of another small module unit through an elastic tube 126 to achieve a communication therebetween. In some embodiments, the elastic tube 126 is a bellows.

In addition, the present application also provides a CTP battery pack, including a battery pack case (not shown in the figures) and the above-mentioned battery cell grouping structure integrated in the case.

In summary, the battery cell grouping structure and CTP battery pack provided by the present application have the following beneficial effects.

According to the battery cell grouping structure of the embodiments of the present application, every two rows of battery cells 11 in the battery cell assembly 1 are fixed to the liquid cooling plate 12 by means of thermal conductive adhesive 13, thereby forming a small module unit for easy transportation.

According to the battery cell grouping structure of the embodiments of the present application, a plurality of positioning protrusions 23 are provided on the support body 21 of the plastic support 2, and a step 111 matched with each positioning protrusion 23 is provided at the position corresponding to the corresponding battery cell 11, so that the battery cell 11 can be positioned to prevent the battery cell 11 from shifting; a plurality of adhesive storage recesses 24 are formed on the support body 21, so as to ensure sufficient thickness of the adhesive, and before placing the battery cell 11, the structural adhesive 22 is first applied to the adhesive storage recess 24, and after the battery cell 11 is placed, the adhesive can be bonded with the plastic support 2 after the adhesive solidifies, and the firmness is strong, thereby ensuring the overall structural strength.

According to the battery cell grouping structure of the embodiments of the present application, a step 111 is provided at the bottom of each battery cell 11, so that when the battery cell 11 is fixed to the plastic support 2, there is a gap between the top surface of the step 111 and the upper end surface of the corresponding positioning protrusion 23, and the gap will form an adhesive overflow cavity. When too much adhesive is applied, the adhesive can overflow through the adhesive overflow cavity.

According to the battery cell grouping structure of the embodiments of the present application, a plurality of plastic supports 2 are engaged together by respectively providing a protrusion structure 26 and a groove structure 27 on two opposite long sides of the support body 21, and the two are engaged with each other to achieve different usage scenarios. In addition, the protrusion structure 26 and the groove structure 27 are engaged with each other to form a step, which can prevent leakage of the structural adhesive.

According to the battery cell grouping structure of the embodiments of the present application, a flange nut 28 is integrally injection-molded in the middle of the lower end surface of the support body 21, so that it can be locked with other structural parts (such as the bottom guard plate) by bolts, and the flange nut 28 has a flange surface, bonding force can be therefore guaranteed for the injection molding. When the plastic support 2 is long, it can increase the supporting strength; by arranging a rubber sealing ring 281 at the bottom of the flange nut 28, a sealing is achieved.

According to the battery cell grouping structure of the embodiments of the present application, a plurality of annular convex edges 29 are provided on the lower end surface of the support body 21, and two adjacent annular convex edges 29 in the same horizontal row are connected by a connecting block 291, thereby improving the overall strength of the plastic support 2; by placing foam 292 in the connecting block 291, when the plastic support 2 is locked with other structural parts (such as the bottom guard plate), the foam 292 can play a role in buffering and shock absorption, while reducing the friction between the plastic support 2 and other structural parts, thereby reducing the NVH ( Noise, Vibration, Harshness) of the battery pack.

According to the battery cell grouping structure of the embodiments of the present application, the CCS assembly 3 is connected to the tops of the plurality of battery cells 11 by welding, and the CCS assembly 3 is implemented as a laminated CCS assembly and does not occupy space in height.

It should be noted that when an element is referred to as being "fixed to" or "disposed on" another element, it can be directly on the other element or indirectly on the other element. When an element is referred to as being "connected to" another element, it can be directly connected to the other element or indirectly connected to the other element.

It should be understood that the orientations or positional relationships indicated by the terms "top", "bottom", "inside", "outside", etc. are based on the orientations or positional relationships shown in the drawings, and are only for the convenience of describing the present application and simplifying the description, and do not indicate or imply that the modules or elements referred to must have a specific orientation, be constructed and operated in a specific orientation, and therefore should not be understood as a limitation on the present application.

In addition, in the description of the present application, "multiple" and "plurality of" mean two or more, unless otherwise clearly and specifically defined.

## Claims

1. A battery cell grouping structure, comprising:
a battery cell assembly (1), comprising a plurality of battery cells (11) and a plurality of liquid cooling plates (12), wherein the plurality of battery cells (11) are arranged in an array, and at least one of the plurality of liquid cooling plates (12) is arranged between and fixedly bonded to ones of the plurality of battery cells (11) in every two rows of the array by a thermal conductive adhesive (13);
a plastic support (2), comprising a support body (21), wherein bottoms of the plurality of battery cells (11) are each fixedly bonded to the support body (21) by a structural adhesive (22); and
a laminated cell connection system (CCS) assembly (3), wherein tops of the plurality of the battery cells (11) are fixedly connected to the CCS assembly (3).

2. The battery cell grouping structure according to claim 1, wherein the plurality of liquid cooling plates (12) are each wavy, the plurality of battery cells (11) are each a cylindrical battery cell which and has a side wall matching a side wall of a corresponding one of the plurality of liquid cooling plates (12) and connected thereto by the thermal conductive adhesive (13).

3. The battery cell grouping structure according to claim 2, wherein the plurality of liquid cooling plates (12) each comprises a plate body (121) with a wavy shape, a first sleeve (122) and a second sleeve (123), wherein the first sleeve (122) and the second sleeve (123) are snapped onto two ends of the plate body (121) respectively;
wherein the first sleeve (122) and/or the second sleeve (123) are provided with a liquid inlet (124) and a liquid outlet (125), and a flow channel is formed inside the plate body (121), so that the flow channel is in communication with the liquid inlet (124) and the liquid outlet (125).

4. The battery cell grouping structure according to any one of claims 1 to 3, wherein an upper surface of the support body (21) is provided with an array of positioning protrusions (23) in one-to-one correspondence with the plurality of the battery cells (11), an adhesive storage recess (24) is provided around an outer periphery of each of the positioning protrusions (23) and is in communication with the positioning protrusion (23), and the structural adhesive (22) is applied in the adhesive storage recess (24).

5. The battery cell grouping structure according to claim 4, wherein a step (111) is provided at the bottom of each of the plurality of battery cells (11) to form a step surface, and a gap is formed between a top of the step surface and an upper end surface of a corresponding positioning protrusion (23), and the gap is in communication with the adhesive storage recess (24) to form an adhesive overflow cavity.

6. The battery cell grouping structure according to claim 4, wherein the support body (21) is provided with pressure relief holes (25) in one-to-one correspondence with the plurality of battery cells (11) at positions corresponding to the positioning protrusions (23), and a pressure relief valve at the bottom of each of the plurality of battery cells (11) is in communication with a corresponding one of the pressure relief holes (25).

7. The battery cell grouping structure according to claim 6, wherein a diameter of the pressure relief hole (25) is defined as a, a diameter of the pressure relief valve is defined as b, where a > b, wherein a difference between the a and b is a requirement for a position tolerance of the battery cell (11).

8. The battery cell grouping structure according to claim 4, wherein the support body (21) is rectangular and has two opposite long sides and two opposite short sides, one of the long sides of the support body (21) is provided with a wavy protrusion structure (26), and the other one of the long sides is provided with a wavy groove structure (27) matching and engageable with the protrusion structure (26).

9. The battery cell grouping structure according to claim 8, wherein the protrusion structure (26) comprises a first groove (261) formed on an upper end surface on the one of the long sides and a wavy protruding rib (262) protruding from the first groove (261); the groove structure (27) is formed as a stepped wavy second groove formed on a lower end surface of the other one of the long sides.

10. The battery cell grouping structure according to claim 4, wherein a flange nut (28) is integrally injection-molded in a middle of a lower surface of the support body (21), and a rubber sealing ring (281) is embedded at a bottom of the flange nut (28).

11. The battery cell grouping structure according to claim 10, wherein the lower surface of the support body (21) is provided with a plurality of annular convex edges (29) along length and width directions of the support body (21), and two adjacent ones of the plurality of annular convex edges (29) arranged along the length direction of the support body (21) are connected by a connecting block (291).

12. The battery cell grouping structure according to claim 11, wherein a cavity is formed in the connecting block (291), and foam (292) is provided in the cavity.

13. The battery cell grouping structure according to claim 8, wherein one of the plurality of liquid cooling plates (12) are arranged between and fixedly bonded to ones of the plurality of battery cells (11) in every two rows of the array by the thermal conductive adhesive (13) to form at least two small module units; bottoms of two of the small module units are fixed to the support body (21) by the structural adhesive, and tops of the two small module units are connected to the CCS assembly (3) to form a large module unit; the protrusion structure (26) on the support body (21) in one large module unit and the groove structure (27) on the support body (21) in another large module unit are engaged with each other to form a module.

14. A cell-to-pack (CTP) battery pack, comprising the battery cell grouping structure according to any one of claims 1 to 13.
